# EUROPÄISCHE PATENTSCHRIFT

(11) **EP 3 152 452 B1**
(45) Veröffentlichungstag und Bekanntmachung des Hinweises auf die Patenterteilung: **19.12.2018**
(21) Anmeldenummer: 15725338.6
(22) Anmeldetag: 28.05.2015
(51) Int. Cl.: F16D 7/08, F16D 43/206

(54) **FREISCHALTENDE ÜBERLASTKUPPLUNG MIT GRUPPENWEISE ANGEORDNETEN ÜBERTRAGUNGSKÖRPERN**
DISCONNECTING OVERLOAD CLUTCH WITH TRANSMISSION BODIES ARRANGED IN GROUPS
ACCOUPLEMENT DE SURCHARGE DÉBRAYABLE POURVU D'ÉLÉMENTS DE TRANSMISSION DISPOSÉS PAR GROUPES

(30) Priorität: 03.06.2014 DE 102014008287
(43) Veröffentlichungstag der Anmeldung: 12.04.2017
(73) Patentinhaber: Chr. Mayr GmbH + Co. KG, 87665 Mauerstetten (DE)
(72) Erfinder: VOGL, Norbert, 86935 Rott (DE)
(74) Vertreter: Ruschke, Hans Edvard
(86) Internationale Anmeldenummer: PCT/EP2015/061808
(87) Internationale Veröffentlichungsnummer: WO 2015/185435

(56) Entgegenhaltungen:
- DE-A1- 2 517 910
- US-A- 3 774 738
- US-A- 4 220 230

## Beschreibung

Im Bereich der industriellen Antriebstechnik haben sich mechanische Überlastkupplungen als Maschinenelemente zur Vermeidung von Schäden durch überhöhte Drehmomente seit langem etabliert.

Abhängig vom jeweiligen Anwendungsfall sind bei mechanischen Überlastkupplungen verschiedene funktionelle Konzepte anzutreffen:
- Durchrastkupplungen für einfachere Antriebe.
- Synchronkupplungen mit winkelgetreuem Einrastwinkel.
- Freischaltkupplungen mit manueller Wiederinbetriebnahme.
- Freischaltkupplungen mit automatischer Wiederinbetriebnahme.

Gegenstand der hier vorgestellten Erfindung ist eine technische Verbesserung für freischaltende Überlastkupplungen nach dem Oberbegriff des Hauptanspruches.

Aus dem Stand der Technik sind Freischaltkupplungen bekannt, bei denen die Wiederinbetriebnahme nach dem Ansprechen bzw. Ausrasten der Kupplung durch langsame Rückwärtsdrehung zwischen An- und Abtriebs - seite erfolgt.

Eine derartige Freischaltkupplung wird in DE 37 27 484 C2 offenbart. Bei dieser vorbekannten Freischaltkupplung nach dem vorgenannten Stand der Technik erfolgt die Drehmomentübertragung zwischen einem (hier als Druckflansch bezeichneten) Antriebselement über ein sogenanntes Schaltteil auf ein (im folgenden als Nabe bezeichneten) Abtriebselement. Dabei ist das Schaltteil drehfest aber axial beweglich mit der Nabe verbunden.

Für die Drehmomentübertragung bei diesem Stand der Technik dienen erste Kugeln als Übertragungskörper, die auf einem äußeren Teilkreis und vorzugsweise mit gleichen Abständen zueinander in einem Kugelkäfig geführt sind. Die dabei als Übertragungskörper dienenden ersten Kugeln werden durch ein auf der Nabe zentriertes Federelement in den kegelförmigen Ausnehmungen im Druckflansch und Schaltteil gehalten.

Beim Ansprechen (also: Ausrasten) der Kupplung durch Überschreiten eines bestimmten durch die Kraft des Federelementes definierten Drehmoments wandern die ersten Kugeln aus den kegelförmigen Ausnehmungen in Druckflansch und Schaltteil heraus und führen dabei auf den Oberflächen der Ausnehmungen eine Wälzbewegung aus. Durch diese Wälzbewegung erfolgt eine Verdrehung zwischen dem Kugelkäfig (mit den darin befindlichen ersten Kugeln) und dem Schaltteil sowie zwischen dem Kugelkäfig und dem Druckflansch.

Auf einem davon separaten inneren Teilkreis des selben Kugelkäfigs sind Stützkugeln angeordnet, die nach der Verdrehung zwischen dem Kugelkäfig und dem Schaltteil in spezielle Stützausnehmungen des Schaltteiles eintreten und dadurch ein Wiedereinrasten der Freischaltkupplung verhindern.

Zur Wiederinbetriebnahme der Freischaltkupplung dienen sogenannte Anschlagkörper, im Folgenden als Steuerbolzen bezeichnet, die durch die Kraft von Federelementen beaufschlagt sind, die auf einem dritten äußeren Teilkreis in Bohrungen des Druckflansches angeordnet sind und die auf einer mit Rampen versehenen Steuerkurve des Schaltteiles gleiten.

Nach dem Ausrasten der bekannten Freischaltkupplung nach dem vorgenannten Stand der Technik befinden sich das Schaltteil und der Kugelkäfig in einer relativen Winkelposition zueinander, bei der die Steuerbolzen während des Auslaufens der Freischaltkupplung auf der Steuerkurve und den Rampen des Schaltteiles gleiten.

Nach dem Stillstand der Kupplung und nach dem Beseitigen der Ursache der Störung (der Überlast) wird die Drehrichtung zwischen Druckflansch und Schaltteil umgekehrt und es erfolgt eine langsame Rückwärtsdrehung zwischen den beiden genannten Teilen. Dabei wird der Kugelkäfig mit den ersten Kugeln durch das Zusammenwirken von Druckflansch, Steuerbolzen, Schaltteil und Mitnehmerflanken des Kugelkäfigs wieder in die ursprüngliche Mittelposition verdreht, d.h. die Freischaltkupplung rastet wieder ein und ist dann wieder betriebsbereit.

Nachteilig an der Freischaltkupplung nach dem voranstehend beschriebenen Stand der Technik der DE 37 27 484 ist der komplizierte Aufbau mit einer hohen Zahl miteinander in Wirkverbindung stehender Funktionsteile. Durch den komplizierten Aufbau der Kupplung neigt diese bereits nach relativ kurzer Betriebsdauer zu Funktionsstörungen, ist für den Betrieb in rauer Umgebung nur bedingt geeignet und ist vergleichsweise teuer in der Herstellung.

Ähnliche Überlastkupplungen sind im Stand der Technik aus der DE 42 22 574 A1 und der DE 33 30 287 A1 bekannt.

Aufgabe der vorliegenden Erfindung ist es somit, eine Freischaltkupplung der oben dargestellten gattungsgemäßen Art vorzustellen, die gegenüber der Kupplung nach dem Stand der Technik folgendes Anforderungsprofil erfüllt und somit deutlich vorteilhafter ist als der bekannte Stand der Technik:
- Einfacher Aufbau der Kupplung mit wenigen Funktionsteilen.
- Robuste Ausführung der Kupplung.
- Hohe Funktionssicherheit über eine lange Betriebsdauer.
- Einfache und kostengünstige Herstellung der Kupplung.

Dieses Aufgabenprofil wird durch eine Freischaltkupplung mit den Merkmalen des Anspruches 1 gelöst.

Dazu wird vorgeschlagen, die Kupplung so auszuführen, dass die Drehmoment übertragenden Teile der Freischaltkupplung beim Ausrasten der Kupplung ohne weitere Zusatzteile eine Freischaltung bewirken. Dies wird dadurch erreicht, dass die zur Drehmomentübertragung dienenden Übertragungskörper in Ausnehmungen der Nabe in Axialrichtung bevorzugt paarweise hintereinander angeordnet sind. Die durch die Kraft von Federelementen in Ausnehmungen des Druckflansches gehaltenen Übertragungskörper übertragen dabei im eingekuppelten Zustand das Drehmoment zwischen Druckflansch und Nabe.

Nach Überschreiten eines durch die Kraft der Federelemente definierten Drehmoments bewegen sich die ersten Übertragungskörper in einer Wälzbewegung aus den Senkungen des Druckflansches heraus, und zwar bis sie auf den in Umfangsrichtung neben den Senkungen des Druckflansches befindlichen Planflächen liegen. Die Wälzbewegung der ersten Übertragungskörper führt zu einer entgegengesetzten Drehbewegung der zweiten damit in Kontakt stehenden Übertragungskörper, die zwischen den ersten Übertragungskörpern und dem Schaltteil angeordnet sind und die die Kraft der Federelemente auf die ersten Übertragungskörper übertragen.

Aus der Drehbewegung der mit dem Schaltteil in Kontakt stehenden zweiten Übertragungskörper resultiert letztlich eine Verdrehung des Schaltteils zur Nabe in die gleiche Drehrichtung wie die Drehbewegung des Druckflansches zur Nabe. Durch die beschriebene Verdrehung wird das Schaltteil, das im eingerückten Zustand der Kupplung die Kraft der Federelemente auf die Übertragungskörper überträgt, in eine Position überführt, in der sich die sonst in Ausnehmungen der Nabe eintauchenden Nocken des Schaltteiles auf einer Planfläche der Nabe abstützen. Somit werden die ersten Übertragungskörper nicht mehr in die Senkungen des Druckflansches zurückgeführt und die Kupplung kann ohne Berührung zwischen Formkörpern und Druckflansch auslaufen.

Zum Wiedereinrasten der Freischaltkupplung wird nach Beseitigung der Störung (d.h. der Überlast) die Drehrichtung zwischen Nabe und Druckflansch umgekehrt. Dadurch tritt ein Mechanismus in Aktion, bei dem - ähnlich wie beim eingangs beschriebenen Stand der Technik - mittels Steuerbolzen das Schaltteil, die Nabe und der Druckflansch wieder in die Winkelposition verdreht werden, in der die Übertragungskörper durch die Kraft der Federelemente wieder mit den Senkungen des Druckflansches in Eingriff kommen. Die Kupplung ist nach dieser beschriebenen Rückwärtsdrehung wieder eingerastet und somit betriebsbereit.

Weiterhin ist es auch denkbar, die erfindungsgemäße Kupplung ohne den beschriebenen Einrastmechanismus zu bauen und das Wiedereinrasten der Kupplung durch manuelles Verdrehen der an der Drehmoment-Übertragung beteiligten Funktionsteile in die Ausgangslage zu realisieren, was allerdings nur mittels von außen ansetzbarer Werkzeuge gelingen würde, mit denen man die verschiedenen Kupplungsteile in eine wiedereinrastbare Relativstellung zueinander bringen müsste.

Es ist auch denkbar, die Übertragungskörper in den Ausnehmungen in ungerader Anzahl (z.B. 1 oder 3 oder 5) anzuordnen, wodurch sich beim Freischalten der Kupplung eine gegenläufige Drehbewegung von Druckflansch und Schaltteil ergibt.

Durch die hier kurz beschriebene Bauweise der Freischaltkupplung können deren Drehmoment übertragender Bauteile groß und stabil ausgeführt werden, weil für die Freischaltfunktion keine zusätzlichen Stützelemente benötigt werden. Dadurch kann eine große Robustheit der Kupplung und als Folge eine hohe Betriebssicherheit sowie eine hohe Lebensdauer erzielt werden. Außerdem ist die erfindungsgemäße Kupplung sehr kostengünstig herstellbar.

Weiterer relevanter Stand der Technik findet sich in der DE 25 17 910 und der US 4,220,230, wobei die erstgenannte Druckschrift als nächstliegender Stand der Technik angesehen wird. Sie zeigt eine Sicherheitskupplung mit in Durchbrechungen der einen Kupplungshälfte befindlichen, paarweise aufeinander abrollenden Zylinderrollen, die beidseitig durch ein federnd nachgiebiges und ein starres Teil der anderen Kupplungshälfte eingeklemmt sind, wobei an dem starren Teil einer Kupplungshälfte Einrastvertiefungen für eine Zylinderrolle jedes Zylinderrollenpaares vorgesehen sind und das federnd nachgiebige Teil sich über mehrere Verriegelungskugeln auf der schrägen Seitenfläche einer Ringnut in dieser Kupplungshälfte abstützt.

Weitere Besonderheiten und vorteilhafte Details der demgegenüber erfindungsgemäßen Freischaltkupplung ergeben sich aus den Beschreibungen der nachfolgend gezeigten bevorzugten Ausführungsformen.

Es zeigen:
Fig. 1 einen Längsschnitt durch eine erfindungsgemäße Kupplung mit Zylinderrollen als Übertragungselemente im eingerasteten Zustand,
**Fig. 2** einen Längsschnitt A - A durch die Kupplung aus Fig. 1,
**Fig. 3** einen weiteren Längsschnitt B - B durch die Kupplung aus Fig.1
**Fig. 4** eine Explosionsdarstellung der erfindungsgemäßen Kupplung,
**Fig. 5** einen Längsschnitt durch eine erfindungsgemäße Kupplung mit Zylinderrollen als Übertragungselemente im ausgerasteten Zustand,
**Fig. 6** einen Längsschnitt C - C durch die Kupplung aus Fig.5,
**Fig. 7** einen weiteren Längsschnitt D - D durch die Kupplung aus Fig.5,
**Fig. 8** einen Längsschnitt durch eine erfindungsgemäße Kupplung mit Zylinderrollen und kurzer erster Nocke im eingerasteten Zustand,
**Fig. 9** einen Längsschnitt E - E durch die Kupplung aus Fig.8 eingerastet,
**Fig. 10** einen Längsschnitt E - E durch die Kupplung aus Fig.8 ausgerastet,

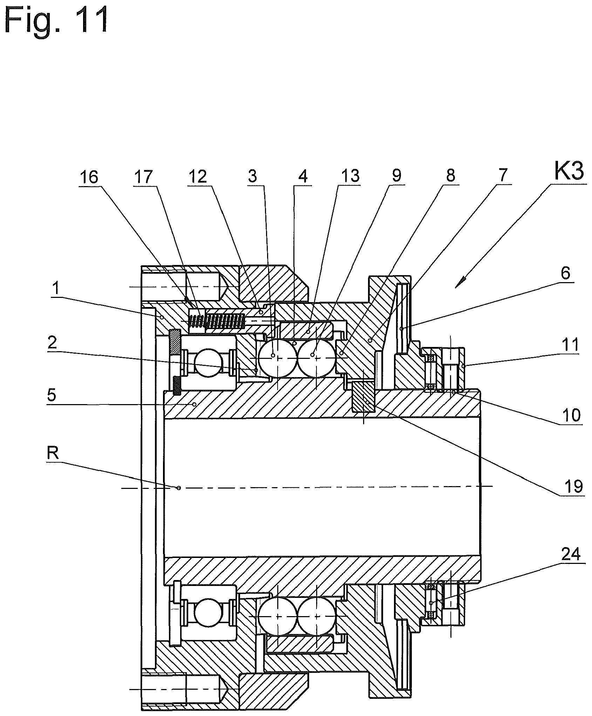

**Fig. 11** einen Längsschnitt durch eine erfindungsgemäße Kupplung mit Kugeln als Übertragungselemente im eingerasteten Zustand.

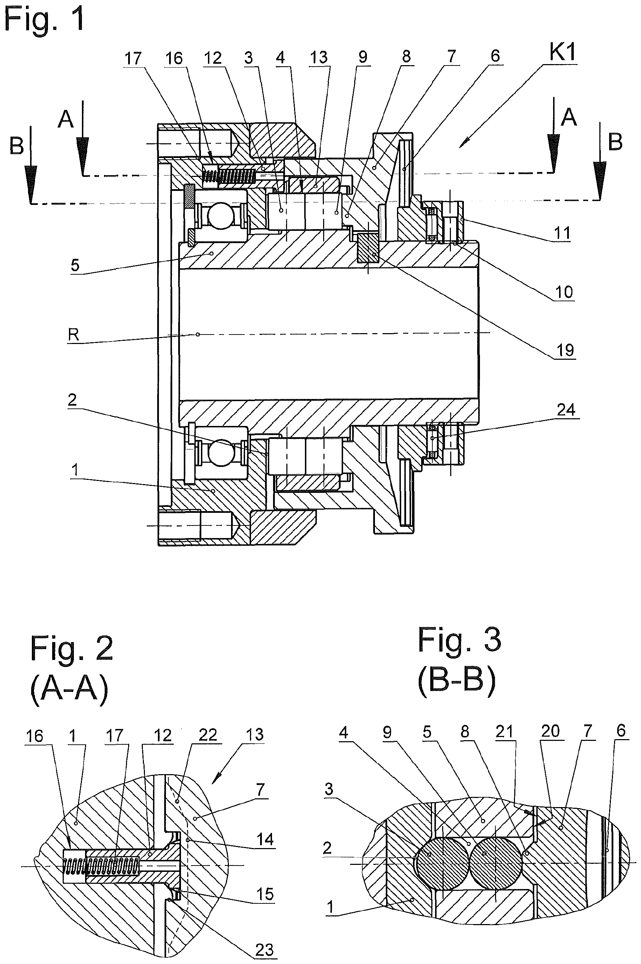

Aus **Fig. 1** ist der grundsätzliche Aufbau der erfindungsgemäßen Kupplung (K1) ersichtlich. Die Drehmomentübertragung der Kupplung erfolgt ausgehend vom hier als Druckflansch (1) bezeichneten und auf der Nabe (5) um die Rotationsachse (R) drehbar gelagerten Antriebselement über die Druckflanschsenkungen (2) auf die als Zylinderrollen ausgebildeten ersten Übertragungskörper (3) und dann über die achsparallel angeordneten ersten Nabenausnehmungen (4) auf die Nabe (5). Dabei werden die ersten Übertragungskörper (3) durch die Kraft von Federelementen (6) in den Druckflanschsenkungen (2) gehalten, wobei die Kraft der Federelemente (6) über das Schaltteil (7), die ersten Schaltteilnocken (8) und zweite Übertragungskörper (9) auf die ersten Übertragungskörper (3) einwirkt. Die Kraft der Federelemente (6) kann über eine mit der Nabe (5) mittels Nabengewinde (10) verbundene Einstellmutter (11) variiert werden.

Auf der stirnseitigen Freifläche 21 des Schaltteils 7 sind mehrere axial hervorstehende Schaltteilnocken 8 auf dem Umfang verteilt angeordnet, die im eingerasteten Zustand der Kupplung in die Nabenausnehmungen 4 hineinragen und letztendlich die darin paarweise vorgesehenen Übertragungskörper 9,3 mit der eingestellten Kraft der Federelemente 6 in die Druckflanschsenkungen 2 hinein beaufschlagen.

Die ersten und zweiten Übertragungskörper (3, 9) sind dabei über eine mit der Nabe (5) fest verbundene Steuerbuchse (13) radial in den ersten Nabenausnehmungen (4) gehalten, die radial in die Nabe 5 bzw. in einen davon radial hervorstehenden Umfangsflansch eingeschnitten sind.

Für die Wiedereinrastung der Kupplung (K1) ist ein aus Fig. 2 gut erkennbares System vorgesehen, das aus einer Anzahl von auf dem Umfang verteilten Steuerbolzen (12), der Steuerbuchse (13) mit darauf angeordneten Steuerkurven (14) und aus dem Schaltteil (7) mit darauf angeordneten Steuernuten (15) besteht. Die Steuerbolzen (12) sind axial beweglich in Bolzenbohrungen (16) des Druckflansches (1) gelagert, die auf einem weiteren / dritten Teilkreis vorzugsweise achsparallel zur Rotationsachse (R) der Kupplung (K1) angeordnet sind. Dabei ist dieser Teilkreisdurchmesser der Bolzenbohrungen (16) so gewählt, dass die Steuerbolzen (12) von Bolzenfedern (17) gleichermaßen gegen die Steuerkurven (14) der Steuerbuchse (13) und die Steuernuten (15) des Schaltteiles (7) gedrückt werden. Im dargestellten eingerasteten Zustand der Kupplung (K1) tauchen die Steuerbolzen (12) in die Steuerkurven (14) und die Steuernuten (15) ein.

Aus **Fig. 3****,** die ebenfalls den eingerasteten Zustand der Kupplung zeigt, ist außerdem die Lage des durch die Kraft der Federelemente (6) beaufschlagten Schaltteiles (7) zu ersehen, dessen erste aus der Freifläche 21 axial hervorstehende Schaltteilnocken (8) in die ersten Nabenausnehmungen (4) eintauchen und die ersten und zweiten Übertragungskörper (3, 9) gegen die Druckflanschsenkungen (2) des Druckflansches (1) drücken. Das axiale Eintauchen der ersten Schaltteilnocken (8) in die ersten Nabenausnehmungen (4) stellt dabei sicher, dass sich das Schaltteil (7) der eingerasteten Kupplung (K1) nicht zur Nabe (5) verdrehen kann.

Beim Ausrasten der Kupplung (K1) bei Erreichen des eingestellten Grenzdrehmomentes erzeugt das zwischen dem Druckflansch (1) und der Nabe (5) wirksame Drehmoment über die keilförmigen Druckflansch-Senkungen (2) eine gegen die Kraft der Federelemente (6) gerichtete Reaktionskraft, die die Kraft der Federelemente (6) übersteigt. Als Folge davon wälzen sich die ersten Übertragungskörper (3) aus den Druckflansch-Senkungen (2) heraus, wobei sich die ersten Übertragungskörper (3) in eine erste Drehrichtung um die eigene Achse drehen. Durch den Kontakt zu den zweiten Übertragungskörpern (9) werden diese in Rotation in die entgegengesetzt gerichtete Drehrichtung versetzt und geben diese Drehbewegung an die ersten Schaltteilnocken (8) des Schaltteiles (7) weiter. Dies führt schließlich dazu, dass sich der Druckflansch (1) und das Schaltteil (7) in Bezug zur Nabe (5) in die gleiche Richtung verdrehen, wobei das Schaltteil (7) gleichzeitig eine Kombination aus einer Drehbewegung und einer gegen die Kraft der Federelemente (6) gerichteten Axialbewegung ausführt.

Eine leichte Verdrehbarkeit zwischen dem Schaltteil (7) und der Nabe (5) wird dabei durch ein zwischen Einstellmutter (11) und Federelement (6) befindliches Axiallager(24) ermöglicht.

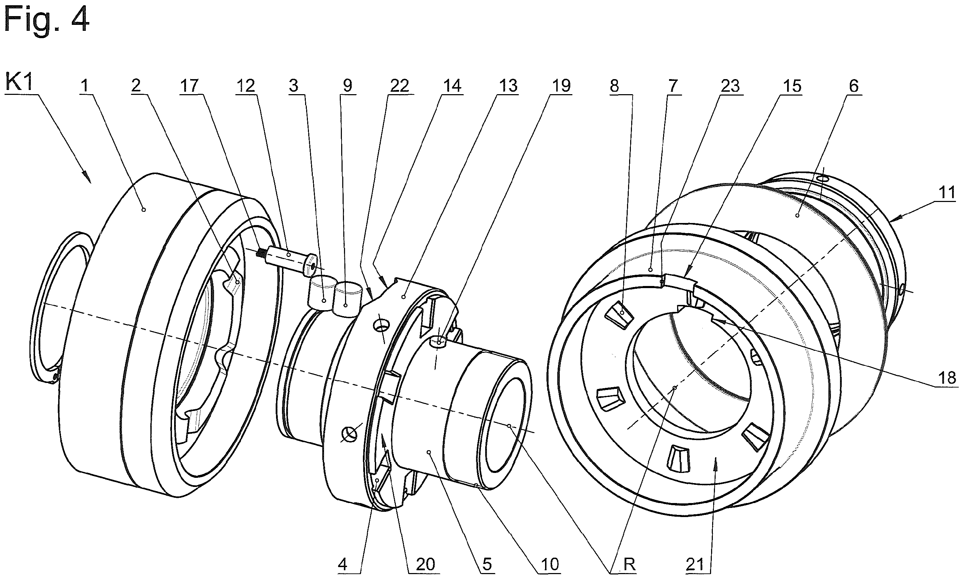

Die beschriebene Dreh- und Axialbewegung des Schaltteiles (7) endet dann, wenn die Anschlagfläche (18) des Schaltteiles (7) auf das mit der Nabe (5) verbundene und daraus radial hervorstehende Anschlagteil (19) trifft, wie dies aus der Explosionsdarstellung in **Fig. 4** ersichtlich ist.

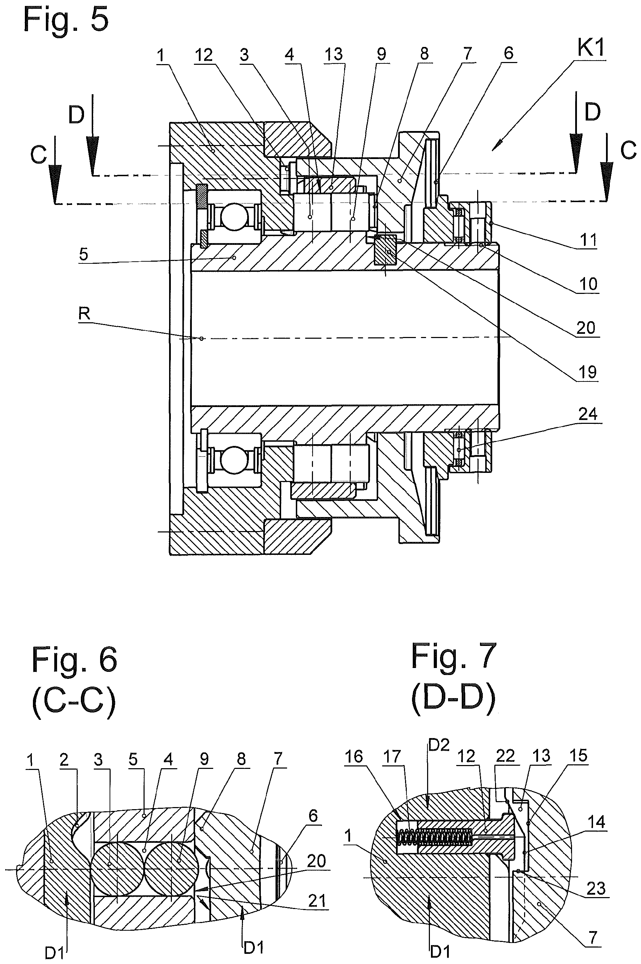

Durch die beschriebene Axial- und Drehbewegung des Schaltteiles (7) haben die ersten Schaltteilnocken (8) die ersten Nabenausnehmungen (4) verlassen und übertragen im ausgerasteten Zustand der Kupplung (K1) die Kraft der Federelemente (6) auf die Stützfläche (20) der Nabe (5), wie dies aus **Fig. 5** und **Fig. 6** ersichtlich ist. Ebenfalls ersichtlich ist, wie sich in diesem freigeschalteten Zustand die ersten Übertragungskörper (3) außer Eingriff mit den Druckflanschsenkungen (2) neben diesen befinden und wie die zweiten Übertragungskörper (9) der Freifläche (21) des Schaltteiles (7) mit Abstand gegenüberstehen. Die Kupplung (K1) ist freigeschaltet und der Druckflansch (1) kann relativ zur Nabe (5) in die dargestellte Ausrastrichtung (D1) ohne Übertragung eines Drehmoments auslaufen, nachdem der Drehmomentantrieb aufgrund des Ausrastens der Kupplung abgeschaltet wird.

Aus **Fig. 7** sind zum einen der Zustand des Wiedereinrastsystems im ausgerasteten Zustand der Kupplung (K1) und zum anderen dessen Funktionsweise beim Wiedereinrasten der Kupplung (K1) ersichtlich. Beim Auslaufen des Druckflansches (1) der Kupplung (K1) in die Ausrastrichtung (D1) tauchen die Steuerbolzen (12) bei jeder Umdrehung in die Steuerkurven (14) der Steuerbuchsen (13) und die Steuernuten (15) des Schaltteiles (7) ein und werden durch die Steuerrampen (22) der Steuerkurven (14) wieder herausgeführt, ohne dadurch eine Bewegung der anderen Funktionsteile der Kupplung (K1) zu bewirken.

Zum Wiedereinrasten der Kupplung (K1) wird die Drehrichtung des Drehmomentantriebes umgekehrt und der Druckflansch (1) wird zur Nabe (5) mit langsamer Geschwindigkeit in die dargestellte Einrastrichtung D2 (Fig.7) verdreht. Dabei tauchen die Steuerbolzen (12) wieder in die Steuerkurve (14) der Steuerbuchse (13) und in die Steuernut (15) des Schaltteiles (7) ein. Weil das Schaltteil (7) zur Nabe (5) verdreht ist, wird dabei die Schaltflanke (23) der Steuernut (15) vom Steuerbolzen (12) erfasst, es erfolgt eine Mitnahme des Schaltteiles (7), und es findet eine Verdrehung zwischen Schaltteil (7) und Nabe (5) statt. Diese Verdrehung endet erst, wenn die Übertragungskörper (3, 9) in die Senkungen (2) des Druckflansches (1) eintauchen, wenn dadurch die erste Nabenausnehmung (4) auf der Seite des Schaltteiles (7) für das Eintauchen der ersten Schaltteilnocken (8) freigegeben wird, wenn die ersten Schaltteilnocken (8) wieder in die ersten Nabenausnehmungen (4) eingreifen und wenn dadurch die Kraft der Federelemente (6) wieder auf den Übertragungskörpern (3, 9) und den Druckflanschsenkungen (2) lastet. Die Kupplung (K1) ist wieder betriebsbereit und kann wieder das volle eingestellte Drehmoment übertragen.

Wegen des in Umfangsrichtung symmetrischen Aufbaus der kupplungs-internen Mechanismen kann die Kupplung in beide Drehrichtungen betrieben werden. Nach dem Ausrasten erfolgt das Wiedereinrasten immer in die der Ausrastung entgegengesetzte Drehrichtung.

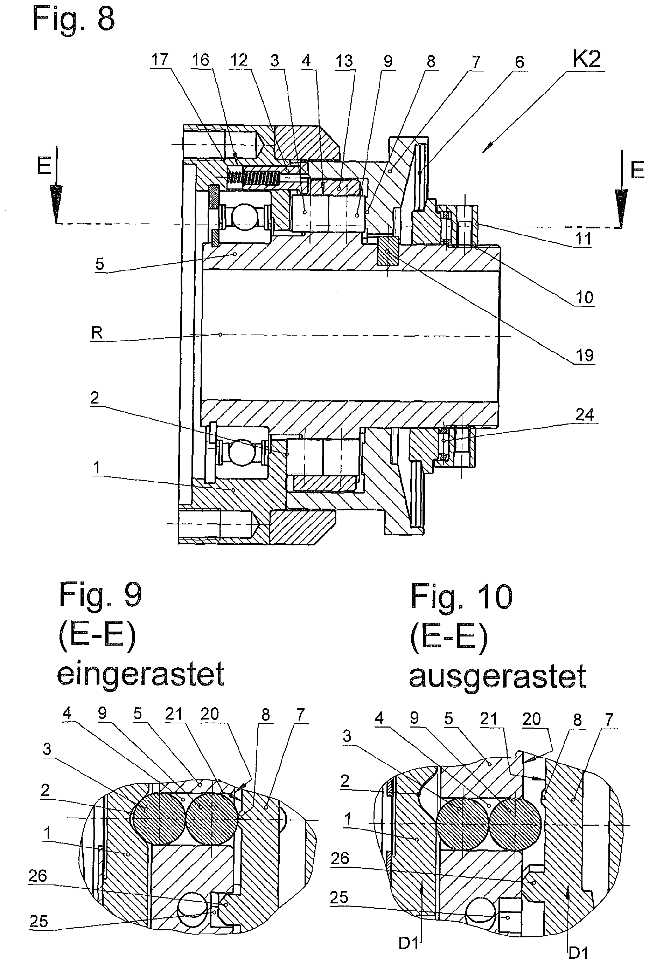

**Fig. 8** zeigt im Längsschnitt eine weitere Ausführungsform der erfindungsgemäßen Kupplung (K2), die anhand der Schnittdarstellungen in den **Fig. 9** und **Fig. 10** näher erläutert wird. Dabei ist die Kupplung in Fig. 9 im eingerasteten Zustand dargestellt.

Die Druckflanschsenkungen (2) und die ersten Nabenausnehmungen (4) fluchten zueinander, wodurch die ersten und zweiten Übertragungskörper (3, 9) durch die Kraft der Federelemente (6) in die Druckflanschsenkungen (2) gedrückt werden und somit zwischen dem Druckflansch (1) und der Nabe (5) ein Drehmoment übertragen. Dabei wird auch hier die Kraft der Federelemente (6) über die ersten Schaltteilnocken (8) des Schaltteiles (7) auf die Übertragungskörper (3, 9) übertragen. Allerdings sind die ersten Schaltteilnocken (8) hier in axialer Richtung kürzer ausgeführt, so dass sie axial nicht in die ersten Nabenausnehmungen (4) hineinragen. Damit sich im eingerasteten Zustand der Kupplung (K2) das Schaltteil (7) dennoch nicht gegenüber der Nabe (5) verdrehen kann, sind auf dem Schaltteil (7) zusätzliche zweite Schaltteilnocken (26) vorgesehen, die axial in weitere zweite Nabenausnehmungen (25) hineinragen und mit diesen in Drehrichtung der Kupplung (K2) eine formschlüssige Verbindung bilden.

Beim Ausrasten der Kupplung (K2) wird die Drehbewegung des Druckflansches wieder über die Übertragungskörper (3, 9) auf die ersten Schaltteilnocken (8) übertragen, wodurch sich die in Fig. 10 dargestellte Konstellation ergibt. Dabei sind die Druckflanschsenkungen (2) und das Schaltteil (7) mit den ersten und zweiten Schaltteilnocken (8. 26) in die dargestellte Ausrastrichtung (D1) zur Nabe (5) verdreht. Die ersten Schaltteilnocken (8) sind nun zu den zweiten Übertragungskörpern (9) so weit versetzt, dass letztere nicht mehr durch die Kraft der Federelemente (6) belastet werden. Die zweiten Schaltteilnocken (26) sind jetzt zu den zweiten Nabenausnehmungen (25) versetzt und übertragen die Kraft der Federelemente (6) auf die Stützfläche (20) der Nabe (5).

Die hier anhand der **Fig. 8, Fig. 9** und **Fig. 10** beschriebene Kupplung (K2) verfügt wie die in den **Fig. 1** bis **Fig. 7** beschriebenen Kupplungen über ein System zur Wiedereinrastung, das im Wesentlichen aus den Steuerbolzen (12) besteht, die mit den Steuerkurven (14) der Nabe (5) und den Steuernuten (15) des Schaltteiles zusammenwirken.

In **2ig. 11** ist eine letzte Ausführungsform einer erfindungsgemäßen Kupplung K3 gezeigt, wobei die Übertragungskörper (3, 9) als Kugeln ausgeführt sind. Vorteil dieser Ausführungsform ist eine weitere Vereinfachung der Fertigung sowie eine weitere Senkung der Herstellkosten. So ist es denkbar, die Nabenausnehmungen (4) als Bohrungen auszuführen, wodurch die Nabe (5) und die darauf angeordnete Steuerbuchse (13) einteilig ausgeführt werden können.

Hinsichtlich der grundsätzlichen Funktionsweise entspricht die hier gezeigte Kupplung (K3) der anhand der **Fig. 1** bis **Fig. 7** gezeigten und beschriebenen Kupplung (K1).

Ferner ist es denkbar, als Übertragungskörper (3, 9) andere rotationssymmetrische Wälzkörper als die bisher beschriebenen zu verwenden. So ist es beispielsweise möglich, tonnenförmige oder kegelige Rollen einzusetzen.

Auch hinsichtlich der Anzahl der in den einzelnen ersten Nabenausnehmungen (4) verwendeten Übertragungskörper (3, 9) sind Variationen zu den dargestellte Ausführungsformen denkbar: Bei Kupplungsvarianten mit dem beschriebenen System zur Wiedereinrastung mittels Drehrichtungsumkehr kann somit in den Nabenausnehmungen (4) zwischen den ersten Übertragungskörpern (3) und den zweiten Übertragungskörpern (9) eine beliebige Zahl **weiterer** Übertragungskörper angeordnet werden, wobei die Menge der zusätzlichen Übertragungskörper zur Sicherstellung einer gleichsinnigen Drehrichtung von Druckflansch (1) und Schaltteil (7) einer geraden Zahl entsprechen muss.

Bei Kupplungsvarianten mit dem beschriebenen manuellen System zur Wiedereinrastung kann somit in den Nabenausnehmungen (4) zwischen den ersten Übertragungskörpern (3) und den zweiten Übertragungskörpern (9) eine beliebige auch ungerade Zahl **weiterer** Übertragungskörper angeordnet werden, weil beim Ausrasten der Freischaltkupplung auch eine gegenläufige Drehrichtung zwischen Druckflansch (1) und Schaltteil (7) akzeptabel ist. Ebenso könnte bei dem manuellen System zur Wiedereinrastung auf die zweiten Übertragungskörper 9 gänzlich verzichtet werden, so dass die Kraft der Federelemente 6 direkt auf die ersten Übertragungskörper 3 einwirkt und diese in den Druckflanschsenkungen 2 hält.

In der Explosionsdarstellung in **Fig. 4** sind sechs gleichbeabstandet auf einem Teilkreis angeordnete Druckflanschsenkungen (2) und analog sechs Gruppen von ersten und zweiten Übertragungskörpern (3, 9) zu sehen. Analog ist es auch denkbar, eine geringere oder größere Anzahl von Druckflanschsenkungen (2) mit entsprechenden Übertragungskörpern (3, 9) vorzusehen - wie es auch möglich ist, diese in unterschiedlichen Abständen zueinander auf dem Teilkreis anzuordnen.

Gleichwohl ist es auch möglich, das System zur Wiedereinrastung der Kupplung, bestehend aus Steuerbolzen 12, Steuerkurve 14 und Steuernut 15, nur einmal oder in mehrfacher Ausführung über den Umfang der Kupplung verteilt anzuordnen.

Insgesamt geht es bei dieser Anmeldung um eineFreischalt-Überlastkupplung mit einer Nabe (5) mit an deren Umfang angeordneten axial gerichteten Nabenausnehmungen (4) und einem auf der Nabe (5) drehbar gelagerten Druckflansch (1) mit axial gerichteten Druckflanschsenkungen (2), wobei in den Nabenausnehmungen (4) z. B jeweils zwei rotationssymmetrische Übertragungs-körper (3,9) angeordnet sind, die von Federelementen (6) über ein Schaltteil (7) in die Druckflanschsenkungen (2) gedrückt werden. Das Schaltteil (7) ist erfindungsgemäß mit gegenüber seiner stirnseitigen Freifläche (21) axial überstehenden Schaltteilnocken (8) versehen, die im eingerasteten Zustand die Kraft der Federelemente (6) auf die Übertragungskörper (3,9) übertragen und dabei axial in die Nabenausnehmungen (4) eingreifen. Beim Ausrasten erfährt das Schaltteil (7) mit den Schaltteilnocken (8) gegenüber der Nabe (5) eine Axialverschiebung und eine Drehbewegung, so dass die Schaltteilnocken (8) in eine Position überführt werden, bei der sie die Kraft der Federelemente (6) nur noch auf eine Stützfläche (20) der Nabe (5) übertragen mit der Folge, dass die Kupplung frei auslaufen kann

### Bezugszeichenliste:

- 1: Druckflansch
- 2: Druckflanschsenkung
- 3: Erster Übertragungskörper
- 4: erste Nabenausnehmung
- 5: Nabe
- 6: Federelement
- 7: Schaltteil
- 8: erste Schaltteilnocke
- 9: Zweiter Übertragungskörper
- 10: Nabengewinde

- 11: Einstellmutter
- 12: Steuerbolzen
- 13: Steuerbuchse
- 14: Steuerkurve
- 15: Steuernut
- 16: Bolzenbohrung
- 17: Bolzenfeder
- 18: Anschlagfläche
- 19: Anschlagteil

- 20: Stützfläche
- 21: Freifläche
- 22: Steuerrampe
- 23: Schaltflanke
- 24: Axiallager
- 25: zweite Nabenausnehmung
- 26: zweite Schaltteilnocke

- D1: Ausrastrichtung
- D2: Einrastrichtung
- K1: Kupplung (mit Rollen als Übertragungskörper)
- K2: Kupplung (mit Rollen als Übertragungskörper, mit ersten und zweiten Nabenausnehmungen, und mit ersten und zweiten Schaltteilnocken)
- K3: Kupplung (mit Kugeln als Übertragungskörper)
- R: Rotationsachse

## Patentansprüche

1. Formschlüssig arbeitende Freischalt-Überlastkupplung, mit:
- einer Nabe (5) mit an deren Umfang angeordneten axial gerichteten ersten Naben-Ausnehmungen (4) und
- mit einem auf der Nabe (5) drehbar gelagerten und mit axial gerichteten Druckflanschsenkungen (2) versehenen Druckflansch (1),
- wobei in jeder der ersten Nabenausnehmungen (4) eine gerade Anzahl rotationssymmetrischer Übertragungskörper (3, 9) angeordnet ist,
- wobei die Übertragungskörper (3, 9) über ein durch die Kraft von Federelementen (6) beaufschlagtes Schaltteil (7) in die Druckflanschsenkungen (2) gedrückt werden,
- wobei die Kupplung durch ein von außen in eine erste oder zweite Drehrichtung (D1, D2) wirkendes Drehmoment zwischen Nabe (5) und Druckflansch (1) außer Eingriff bringbar ist und
- wobei sich dann die Übertragungskörper (3, 9) axial aus den Druckflanschsenkungen (2) heraus in den ersten Nabenausnehmungen (4) gegen die Kraft der Federelemente (6) bewegen,
**dadurch gekennzeichnet,**
- **dass** das Schaltteil (7) mit axial überstehenden ersten Schaltteilnocken (8) versehen ist, die im eingerasteten Zustand der Überlastkupplung auf der dem Druckflansch (1) axial gegenüberliegenden Seite die Kraft der Federelemente (6) auf die Übertragungskörper (3, 9) übertragen,
- **dass** die ersten Schaltteilnocken (8) axial in die ersten Nabenausnehmungen (4) oder zusätzlich angeordnete zweite Schaltteilnocken (26) axial in zweite Nabenausnehmungen (25) eingreifen,
- **dass** sich beim Ausrasten der Kupplung durch die zwischen den Übertragungskörpern (3, 9), dem Druckflansch (1) und den ersten Schaltteilnocken (8) des Schaltteiles (7) stattfindenden Wälzbewegungen der Druckflansch (1) und das Schaltteil (7) gleichsinnig zur Nabe (5) verdrehen,
- **dass** zur Begrenzung der Drehbewegung zwischen der Nabe (5) und dem Schaltteil (7) geeignete Anschlagelemente (18, 19) angeordnet sind,
**dass** sich die ersten und zweiten Schaltteilnocken (8, 26) nach Beendigung der Drehbewegung in Umfangsrichtung neben den ersten und zweiten Nabenausnehmungen (4, 25) befinden,
- **dass** anschließend die ersten oder zweiten Schaltteilnocken (4, 26) die Kraft der Federelemente (6) auf eine Stützfläche (20) der Nabe übertragen
- und **dass** sich neben den ersten und zweiten Schaltteilnocken (8, 26) eine in axialer Richtung zurückgesetzte Freifläche (21) des Schaltteiles (7) befindet, die den Übertragungskörpern (3, 9) im ausgerasteten Zustand der Kupplung soviel axialen Freiraum ermöglicht, dass diese nicht mehr in die Druckflanschsenkungen (2) eintauchen.

2. Überlastkupplung nach Anspruch 1, **dadurch gekennzeichnet,**
- **dass** in jeder der ersten Nabenausnehmungen (4) eine gerade Anzahl rotationssymmetrischer Übertragungskörper (3, 9) angeordnet ist
- und **dass** sich dadurch beim Ausrasten der Kupplung der Druckflansch (1) und das Schaltteil (7) gleichsinnig zur Nabe (5) verdrehen.

3. Überlastkupplung nach Anspruch 1, **dadurch gekennzeichnet,**
- **dass** die Kupplung durch einen zusätzlichen aus federbelasteten Steuerbolzen (12), Steuerkurven (14) und Steuernuten (15) bestehenden Wiedereinrastmechanismus wieder in Eingriff bringbar ist,
- wobei die Wiedereinrastung der Kupplung durch Umkehrung der ersten Drehrichtung (D1) in eine entgegengesetzte zweite Drehrichtung (D2) zwischen Nabe (5) und Druckflansch (1) erfolgt.

4. Überlastkupplung nach mindestens einem der vorhergehenden Ansprüche, **dadurch gekennzeichnet, dass** die Steuerbolzen (12) in Bolzenbohrungen (16) des Druckflansches (1) geführt sind, dass die Steuerkurven (14) fest mit der Nabe (5) verbunden sind und dass die Steuernuten (15) in fester Verbindung zum Schaltteil (7) stehen.

5. Überlastkupplung nach Anspruch 1, **dadurch gekennzeichnet, dass** die Kupplung durch äußeres Zutun in der Art wieder in Eingriff bringbar ist, bei der die Wiedereinrastung der Kupplung durch ein Ausrichten von Druckflanschsenkungen (2) und Nabenausnehmungen (4) und durch ein anschließendes Verdrehen des Schaltteiles (7) entgegen der Ausrastrichtung erfolgt.

6. Überlastkupplung nach mindestens einem der vorhergehenden Ansprüche, **dadurch gekennzeichnet, dass** die Übertragungskörper (3, 9) als Zylinderrollen ausgeführt sind.

7. Überlastkupplung nach mindestens einem der vorhergehenden Ansprüche, **dadurch gekennzeichnet, dass** die Übertragungskörper (3, 9) als kegel- oder tonnenförmige Rollen ausgeführt sind.

8. Überlastkupplung nach mindestens einem der vorhergehenden Ansprüche, **dadurch gekennzeichnet, dass** die Übertragungskörper (3, 9) als Kugeln ausgeführt sind und die axial gerichteten Ausnehmungen (4) der Nabe (5) zur Aufnahme der Übertragungskörper (3, 9) als Bohrungen realisiert sind.

## Claims

1. Positive connection disconnecting overload clutch, comprising:
a hub (5) with axially aligned first hub recesses (4) arranged on its circumference, and
a pressure flange (1) rotationally mounted on the hub (5) and having axially aligned pressure flange recesses (2),
wherein an even number of rotationally symmetrical transmission bodies (3, 9) is arranged in each of the first hub recesses (4),
wherein the transmission bodies (3, 9) are pressed into the pressure flange recesses (2) through a switch element (7) acted upon by the force of spring elements (6),
wherein the clutch can be brought out of engagement through an outside torque working in a first or second rotational direction (D1, D2) between the hub (5) and the pressure flange (1), and
wherein the transmission bodies (3, 9) move against the force of the spring elements (6) out of the pressure flange recesses (2) into the first hub recesses (4),
**characterized in that**
the switch element (7) is provided with axially protruding first switch element lobes (8) which in the engaged condition of the overload clutch transfer the force of the spring elements (6) onto the transmission bodies (3, 9) on the axially opposed side of the pressure flange (1),
that the first switch element lobes (8) engage into the first hub recesses (4) or additionally disposed second switch element lobes (26) engage axially in second hub recesses (25),
that upon disengagement of the clutch by way of the rolling movement between the transmission bodies (3, 9) the pressure flange (1) and the first switch element lobes (8) of the switch element (7), the pressure flange (1) and the switch element (7) turn in the same sense relative to the hub (5),
that to limit the rotational movement between the hub (5) and the switch element (7) suitable stop elements (18, 19) are arranged, such that the first and second switch element lobes (8, 26) following conclusion of the rotational movement in the circumferential direction are disposed next to the first and second hub recesses (4, 25),
that subsequently the first or second switch element lobes (4, 26) transfer the force of the spring elements (6) onto a support surface (20) of the hub,
and that next to the first and second switch element lobes (8, 26) is a free face (21) of the switch element (7) recessed in the axial direction, which in the disengaged condition of the clutch allows the transmission bodies (3, 9) such clearance that these no longer protrude into the pressure flange recesses (2).

2. Overload clutch according to claim 1, **characterized in that**
an even number of rotationally symmetrical transition bodies (3, 9) is arranged in each of the first hub recesses (4),
and that thereby upon disengagement of the clutch the pressure flange (1) and the switch element (7) rotate against the hub (5) in the same sense.

3. Overload clutch according to claim 1, **characterized in that**
the clutch can again be brought into engagement through an additional re-engagement mechanism composed of spring loaded control pins (12), control cams (14) and control grooves (15),
wherein re-engagement of the clutch follows a reversal of the first rotational direction (D1) to an opposing second rotational direction (D2) between the hub (5) and the pressure flange (1).

4. Overload clutch according to at least one of the preceding claims, **characterized in that** the control pins (12) are guided in pin bores (16) of the pressure flange (1), that the control cams (14) are firmly attached to the hub (5) and that the control grooves (15) are in firm connection with the switch element (7).

5. Overload clutch according to claim 1, **characterized in that** through external intervention the clutch can be brought back into engagement in such a manner that the re-engagement of the clutch is through an alignment of the pressure flange depressions (2) and the hub recesses (4) and through a subsequent turning of the switch element (7) against the disengagement direction.

6. Overload clutch according to at least one of the previous claims, **characterized in that** the transmission bodies (3, 9) are provided as cylindrical rollers.

7. Overload clutch according to at least one of the previous claims, **characterized in that** the transmission bodies (3, 9) are provided as conical or barrel-shaped rollers.

8. Overload clutch according to at least one of the previous claims, **characterized in that** the transmission bodies (3, 9) are provided as balls and that the axially aligned recesses (4) of the hub (5) for acceptance of the transmission bodies (3, 9) are provided as bores.

## Revendications

1. Accouplement de surcharge débrayable travaillant par complémentarité de formes, avec :
- un moyeu (5) avec des premiers évidements de moyeu (4) dirigés axialement agencés sur sa périphérie et
- avec un flasque de pression (1) pourvu de renfoncements de flasque de pression (2) dirigés axialement et logés de manière rotative sur le moyeu (5),
- dans lequel un nombre pair de corps de transmission (3, 9) à symétrie de révolution est agencé dans chacun des premiers évidements de moyeu (4),
- dans lequel les corps de transmission (3, 9) sont pressés par le biais d'une partie de commutation (7) sollicitée par la force d'éléments à ressort (6) dans les renfoncements de flasque de pression (2),
- dans lequel l'accouplement peut être amené hors prise par un couple agissant de l'extérieur dans un premier ou second sens de rotation (D1, D2) entre le moyeu (5) et le flasque de pression (1) et
- dans lequel les corps de transmission (3, 9) se déplacent ensuite axialement hors des renfoncements de flasque de pression (2) dans les premiers évidements de moyeu (4) contre la force des éléments à ressort (6), **caractérisé en ce**
- **que** la partie de commutation (7) est pourvue de premières cames de partie de commutation (8) dépassant axialement qui à l'état engagé de l'accouplement de surcharge sur le côté opposé axialement au flasque de pression (1) transmettent la force des éléments à ressort (6) aux corps de transmission (3, 9),
- **que** les premières cames de partie de commutation (8) se mettent en prise axialement dans les premiers évidements de moyeu (4) ou des secondes cames de partie de commutation agencées en plus (26) se mettent en prise axialement dans des seconds évidements de moyeu (25),
- **que** au dégagement de l'accouplement par les mouvements de roulement, le flasque de pression (1) et la partie de commutation (7) se tournent dans le même sens vers le moyeu (5) en opérant un mouvement de roulement entre les corps de transmission (3, 9), le flasque de pression (1) et les premières cames de partie de commutation (8) de la partie de commutation (7),
- **que** pour la limitation du mouvement de rotation entre le moyeu (5) et la partie de commutation (7) des éléments de butée (18, 19) appropriés sont agencés,
**que** les première et seconde cames de partie de commutation (8, 26) se trouvent à la fin du mouvement de rotation dans le sens périphérique à côté des premier et second évidements de moyeu (4, 25),
- **qu'**ensuite les première ou seconde cames de partie de commutation (4, 26) transmettent la force des éléments à ressort (6) à une surface d'appui (20) du moyeu
- et **qu'**une surface libre (21) en retrait dans le sens axial de la partie de commutation (7) se trouve près des première et seconde cames de partie de commutation (8, 26), laquelle fournit aux corps de transmission (3, 9) à l'état dégagé de l'accouplement autant d'espace libre axial que ceux-ci ne pénètrent plus dans les renfoncements de flasque de pression (2).

2. Accouplement de surcharge selon la revendication 1, **caractérisé en ce**
- **qu'**un nombre pair de corps de transmission (3, 9) à symétrie de révolution est agencé dans chacun des premiers évidements de moyeu (4),
- et **qu'**ainsi lors du dégagement de l'accouplement le flasque de pression (1) et la partie de commutation (7) se tournent dans le même sens vers le moyeu (5).

3. Accouplement de surcharge selon la revendication 1, **caractérisé en ce**
- **que** l'accouplement peut de nouveau être amené en prise par un mécanisme de réengagement supplémentaire composé de tourillons de commande (12), profils de commande (14) et encoches de commande (15) sollicités par ressort,
- dans lequel le réengagement de l'accouplement est effectué par inversement du premier sens de rotation (D1) à un second sens de rotation (D2) opposé entre le moyeu (5) et le flasque de pression (1).

4. Accouplement de surcharge selon au moins une des revendications précédentes, **caractérisé en ce que** les tourillons de commande (12) sont guidés dans des perçages de tourillon (16) du flasque de pression (1), que les profils de commande (14) sont solidaires du moyeu (5) et que les encoches de commande (15) se trouvent en raccordement fixe avec la partie de commutation (7).

5. Accouplement de surcharge selon la revendication 1, **caractérisé en ce que** l'accouplement peut de nouveau être amené en prise par une intervention extérieure de la sorte, pour lequel le réengagement de l'accouplement est effectué par une orientation de renfoncements de flasque de pression (2) et d'évidements de moyeu (4) et par une rotation consécutive de la partie de commutation (7) dans le sens inverse au dégagement.

6. Accouplement de surcharge selon au moins une des revendications précédentes, **caractérisé en ce que** les corps de transmission (3, 9) sont réalisés comme rouleaux de cylindre.

7. Accouplement de surcharge selon au moins une des revendications précédentes, **caractérisé en ce que** les corps de transmission (3, 9) sont réalisés comme rouleaux en forme de cône ou tonneau.

8. Accouplement de surcharge selon au moins une des revendications précédentes, **caractérisé en ce que** les corps de transmission (3, 9) sont réalisés comme des sphères et les évidements (4) du moyeu (5) dirigés axialement sont réalisés pour la réception des corps de transmission (3, 9) comme perçages.
